# EUROPEAN PATENT APPLICATION

(11) **EP 0 952 262 A2**
(43) Date of publication of application: **27.10.1999**
(21) Application number: 99106721.6
(22) Date of filing: 01.04.1999
(51) Int. Cl.: E03C 1/22, E03F 5/04

(54) **Expansion device for locking drawholes and grates**

(30) Priority: 15.04.1998 IT MI980787
(71) Applicant: Cavagnini, Ermanno, 25010 Calcinatello di Calcinato (BS) (IT)
(72) Inventor: Cavagnini, Ermanno, 25010 Calcinatello di Calcinato (BS) (IT)
(74) Representative: Lecce, Giovanni

(57) **Abstract**

An expansion device for locking floor and/or wall drawholes or grates comprising a screw (10) having a threaded stem (12); a hollow supporting means (16) inserted in said stem (12) and whose through-hole (18) is provided with a complementary threading which engages with the one of the threaded stem (12); at least two jaws (20, 20') symmetrically placed and hinged, in correspondence of one of their ends, on the supporting means (16); a hollow expander (22) inserted in said stem (12) under jaws (20, 20') and in whose through-hole (24) stem (12) slides, and a self-locking nut (26) fixed to the free end of screw (10).

## Description

The present invention relates to an expansion device for locking drawholes and grates.

More particularly, the present invention relates to an expansion device for locking, in pipings from PVC, Geberit and the like, floor and/or wall inlet drawholes and fluid suction and delivery grates, prevailingly in the swimming pool and industrial sectors.

As is known, inlet drawholes and fluid suction and delivery grates are generally located and fixed to the related pipings by means of a threaded attachment. To realise such type of attachment, it is necessary to perform several operations before casting the first layer, such as the positioning and levelling of the piping, and various adjustments; this involves a remarkable time waste.

It is also known how to fix the fluid inlet caps by means of expansion screws which engage in holes obtained in the finished floor and wall. However, the hole may jeopardise the tightness of the floor or wall, causing liquid seepages into said floor or wall; this problem is particularly relevant in the sector of swimming pools.

Besides, the above described method, used to lock drawholes and grates, is very complicated and, especially, does not ensure that the same are correctly assembled. Obviously, any possible imperfections in the assembly of said drawholes and grates may cause fluid seepages and/or losses.

Object of this invention is to obviate the above drawbacks.

More particularly, object of this invention is to realise a device allowing the locking of inlet drawholes and fluid suction and delivery grates in an easy, quick and correct manner, without having recourse to floor or wall drillings.

According to the present invention, these and still other objects are achieved by an expansion device comprising a screw with a threaded stem, provided with a head at one end; a hollow supporting means inserted in said stem and whose through-hole is provided with a complementary threading which engages with the one of said threaded stem; at least two jaws symmetrically placed and hinged, in correspondence of one of their ends, on the supporting means; a hollow expander inserted in said stem under the supporting means and in whose non-threaded through-hole the stem slides, and a self-locking nut fixed to the free end of the screw. The hollow supporting means is preferably a cylinder provided with a threaded hole whose axis is perpendicular to that of the cylinder.

The expander may have any cylindrical or polygonal sections, even if the cylindrical section is preferred.

The constructive and functional characteristics of the expansion device for locking floor and/or wall drawholes and grates of the present invention will be better understood thanks to the following description, wherein reference is made to the attached drawings which represent a preferred embodiment solely reported by way of non limiting example, and wherein:
Figure 1 is a schematically exploded, partly sectioned side view of the expansion device of the present invention;
Figure 2 is a partly sectioned side view of the device of Figure 1, before its expansion;
Figure 3 is a partly sectioned side view of the device of the preceding figures, after its expansion;
Figure 4 is a partly sectioned view of a section of the device of Figure 3, taken with a plane passing along the IV-IV line.

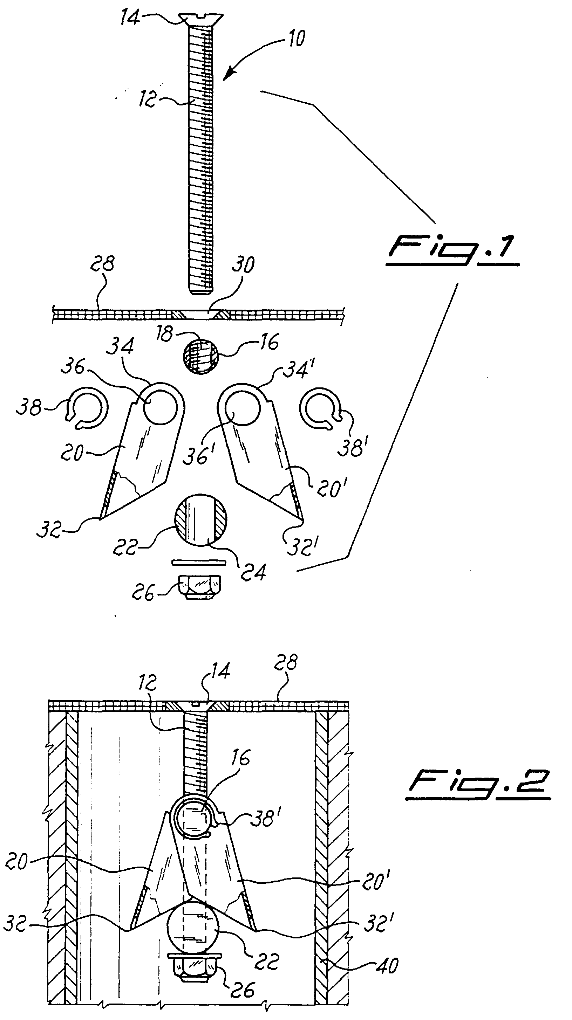

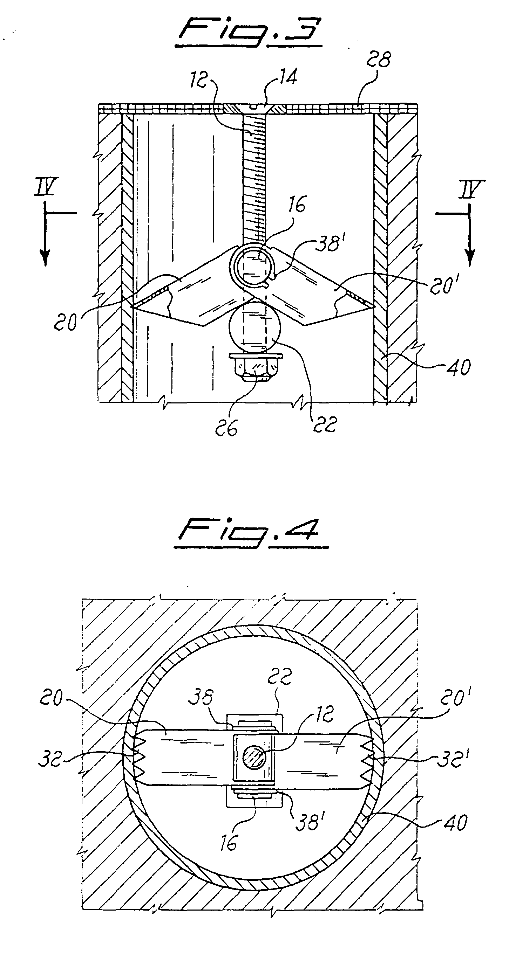

With reference to the mentioned figures, the expansion device of the present invention comprises a screw 10 with a threaded stem 12 and provided with a head 14 at one end.

A hollow supporting means 16, having a complementary threaded through-hole 18, is inserted in said threaded stem 12 and engages in the respective threadings.

At least two jaws 20, 20' are engaged, in correspondence of one of their end, on said hollow supporting means 16.

In the threaded stem 12, under said hollow supporting means 16, a hollow expander 22 is inserted, constituted by an elongated body, provided with a transversal, non-threaded through-hole 24, wherein stem 12 of screw 10 can freely slide.

At the lower free end of stem 12, opposite to the one provided with head 14, a self-locking nut 26 is fixed.

A grate or drawhole 28 provided with a through-hole 30 is inserted in stem 12 between head 14 and the supporting means 16 carrying jaws 20 and 20'.

The hollow support 16 if from steel or other suitable material and has preferably a cylindrical shape. The threaded through-hole 18 is substantially obtained at about mid-way of said supporting means.

According to an embodiment shown in the figures, jaws 20, 20' are in number of two and positioned at 180° with respect to each other. Said jaws may be in any number higher than two, such as for instance three or four, and equidistant from each other.

Said jaws 20, 20' are preferably from U-bent sheet steel, with the side walls preferably cut according to an acute angle. The protruding free edge of each jaw 20, 20', corresponding to the base side of the "U", is provided with a plurality of preferably triangular teeth 32, 32'. On the front opposite to that of said teeth 32, 32', each side wall has a half-circular profile 34, 34', provided with a circular through-hole 36, 36'. In the through-holes 36, 36' of the side walls, the opposite ends of the supporting means 16 are inserted. Jaws 20, 20' are free to rotate with respect to the axis of the supporting means 16, while any side shifting of the same is prevented by stop elastic strips 38, 38' placed at the ends of the supporting means 16.

Expander 22 is preferably from steel and may have any shape, for instance, cylindrical, triangular, rectangular, square or generally polygonal; the cylindrical one is preferred.

Preferably, screw 10 has a countersunk head, flat or cap-shaped, with a simple or cross cut.

One or more springs and/or return elastic means (not shown in the figures) may be inserted on the toothed ends of jaws 20, 20', in such a way as to oppose the opening of said jaws. Said springs and/or elastic means easy the introduction of the expansion device of the present invention in piping 40 and the maintaining of the correct position of the jaws in the starting stages of the locking operations.

The device of the present invention works as follows:
Screw 10 is inserted in the through-hole 30 of a drawhole or grid 28 to be fixed to the floor or the wall. Afterwards, there are inserted in screw 10, sequentially, the supporting means 16 provided with jaws 20, 20', the expander 22 and the self-locking nut 26. The so assembled device in inserted into the piping cut at the level of the floor or the wall, causing grate or drawhole 28 to adhere to the free surface of the piping. At the start, jaws 20, 20' are approached to one another and form, together with stem 12, an acute angle generally non greater than 45°, so that the ends provided with teeth 32, 32' do not touch the surrounding walls of piping 40. By rotating screw 10 anticlockwise, the supporting means 16 is shifted towards expander 22. In this way, jaws 20, 20' are pushed against expander 22 which causes their opening, bringing the toothed end 32, 32' of said jaws 20, 20' in touch with the surrounding walls of piping 40. By rotating screw 10 further, jaws 20, 20' are forced against the surrounding walls of piping 40, so as to lock drawhole and grate 28.

It is obvious that by carefully selecting the length of jaws 20, 20' it is possible to obtain expansion locking devices for pipings having any diameters.

The rotation of screw 10 in a direction opposite to the preceding one involves the removing of expander 22 from the supporting means 16, and therefore from jaws 20, 20', so that the latter can return to the starting position, preferably through a return spring.

In this way, the drawhole or grate 28 is free and can be removed together with the locking expansion device.

As can be understood from the above, the advantages achieved by the present invention are evident.

The expansion device 10 for the locking of inlet drawholes and fluid suction and delivery grates of the present invention achieve a perfect locking without drilling holes in the floor and/or the wall.

Besides, the operations to obtain the locking are particularly quick and simple.

While the present invention have been described hereinabove with reference of a preferred embodiment by way of example, many changes and variants may be made in the expansion device by those skilled in the art, in the light of the above teaching.

It is therefore understood that the present invention covers all the changes and variants that fall within the spirit and the protection scope of the following claims.

## Claims

1. An expansion device for locking floor and/or wall drawholes or grates comprising a screw (10) having a threaded stem (12) and provided with a head (14) at one end; a hollow supporting means (16) inserted in said stem (12) and whose through-hole (18) is provided with a complementary threading which engages with the one of the threaded stem (12); at least two jaws (20, 20') symmetrically placed and hinged, in correspondence of one of their ends, on the supporting means (16); a hollow expander (22) inserted in said stem (12) under jaws (20, 20') and in whose through-hole (24) stem (12) slides, and a self-locking nut (26) fixed to the free end of screw (10).

2. The expansion device according to claim 1, wherein jaws (20, 20') are in number of two, positioned at 180° with respect to each other.

3. The expansion device according to claim 1 or 2, wherein jaws (20, 20') are from U-bent sheet steel, with the side walls preferably cut according to an acute angle and the protruding free edge of each jaw (20, 20'), corresponding to the base side of the "U", is provided with a plurality of preferably triangular teeth (32, 32').

4. The expansion device according to any of the preceding claims, wherein each side wall of jaws (20, 20') on the side opposite to the one of teeth (32, 32') has a semicircular profile (34, 34'), provided with a circular through-hole (36, 36'); the opposite ends of the supporting means (16) being inserted in said through-holes (36, 36') of the side walls.

5. The expansion device according to any of the preceding claims, wherein stop elastic strips (38) placed at the end of the supporting means (16) prevents the side shifting of jaws (20, 20').

6. The expansion device according to any of the preceding claims, wherein the hollow supporting means (16) is from steel and is constituted by a cylindrical body.

7. The expansion device (10) according to any of the preceding claims, wherein expander (22) is from steel and has a cylindrical or polygonal shape.

8. The expansion device according to any of the preceding claims, wherein one or more return springs and/or elastic means are inserted on the toothed ends (32, 32') of jaws (20, 20'), act on the opposite acute angle ends (30) of the jaws, opposing the opening of the same.

9. Utilisation of the expansion device according to any of the preceding claims for locking pipings from PVC, Geberit or the like of water inlets in swimming pools.

10. Utilisation of the expansion device according to any of claims 1-8 for locking fluid suction and delivery grates in the swimming pool and industrial sectors.
